# EUROPEAN PATENT SPECIFICATION

(11) **EP 3 819 239 B1**
(45) Date of publication and mention of the grant of the patent: **21.02.2024**
(21) Application number: 20020505.2
(22) Date of filing: 02.11.2020
(51) Int. Cl.: B65G 57/30, B65G 59/06, B65G 60/00

(54) **DEVICE FOR MOVING PALLETS**
VORRICHTUNG ZUM BEWEGEN VON PALETTEN
DISPOSITIF PERMETTANT DE DÉPLACER DES PALETTES

(30) Priority: 05.11.2019 IT 201900020420
(43) Date of publication of application: 12.05.2021
(73) Proprietor: Atlanta Stretch S.p.A., 47824 Poggio Torriana (RN) (IT)
(72) Inventor: Forni, Angelo, I - 47824 Poggia Torriana (RN) (IT); Bruni, Valeriano, I - 47824 Poggia Torriana (RN) (IT); Paci, Gianluca, I - 47824 Poggia Torriana (RN) (IT)
(74) Representative: Cacciamani, Clizia

(56) References cited:
- CN-U- 206 692 003
- DE-B3-102015 010 072
- JP-A- S5 548 130
- JP-A- S5 964 422
- US-A- 2 693 898

## Description

### Field of the Invention

The present invention refers to a device for moving pallets. In particular, the present invention refers to a device for moving pallets which does not require any kind of feeding.

### State of the art.

Devices such as platforms or pallets are known on the market, typically referred to by the term "pallets", which are used to support various types of material placed onto them to facilitate their transport and storage.

These pallets are handled by specific equipment, such as forklifts or pallet trucks.

On the market there are different types of stackers/destackers for moving pallets; these devices are used to stack empty pallets one on top of the other after they have been freed from their load, or when they must be stored in an orderly manner until their next use. When needed, the destacker will take from the stack the number of pallets necessary for a new operation of loading objects onto the pallets for a new transport.

The known in the art stackers/destackers need at least a sort of power supply, some even pneumatic supply because the movements necessary to stack and unstack the pallets are generally driven by electric motors or by pneumatic or hydraulic pistons.

This makes them expensive and requiring a connecting point to supply power; the latter can be a problem when the space where the pallets must be stacked or unstacked is very large, for example in a courtyard or in a shed far from socket points for electricity connection.

Furthermore, the known in the art stackers/destackers require to select the stacking or unstacking function, depending on the request, before proceeding with one or the other action.

The Chinese utility model published with no. CN206692003U discloses a device for moving pallets according to the preamble of claim 1. In particular, said document discloses a forkshaped machine for moving pallets comprising a piece of wheel which is provided with a plurality of trays which are in contact with each other. A spindle mechanism is equipped with a ratchet capable of synchronous rotation with the piece of wheel and a pawl for forward limitation and a pawl for backward limitation. A limiting mechanism used to limit the reversing assembly rotating towards the direction of application of the tray, and a driving device used to control the limiting direction of the reversing assembly.

The Applicant has underlined the need to achieve a stacker/unstacker for pallets solving the above highlighted technical problems, and in particular not requiring any type of power supply (electric, pneumatic, hydraulic, etc.).

### Summary of the invention

The invention provides a device for moving pallets according to claim 1.

The present invention derives in fact from the general consideration according to which the above highlighted technical problem can be solved in an effective and reliable way by means of a device for moving pallets comprising a central body consisting of a first side element and a second side element, parallel one each other, and a rear element for connecting the side elements one each other so as to delimit in between them an empty area adapted to contain a plurality of pallets stacked one above the other, wherein said central body is further provided with an opening between said side elements disposed on the opposite side of said rear element so as to substantially assume a U-shape, wherein said opening is able to allow the passage of at least one pallet for its/their insertion/removal into/from said empty area.

The pallet handling device of the present invention is also provided with:
- at least one first shaft arranged along said first side element and at least one second shaft arranged along said second side element, said shafts being both arranged towards the outside of the device with respect to said empty area;
- at least one first ratchet wheel able to integrally rotate with said first shaft and a second ratchet wheel able to integrally rotate with said second shaft, wherein each of said ratchet wheels is adapted to engage/disengage with a corresponding stop tooth to support said pallet stack or to release it to allow it to descend.

In this way, the device of the present invention uses only mechanical elements and means (such as, for example, shafts and wheels with engagement elements), without the aid of any electrical, pneumatic or hydraulic component, solving the highlighted above technical problem.

Furthermore, the movements required to stack and unstack the pallets are directly derived from the movement of the pallet truck (or from another handling and lifting system) by which the pallet is inserted therein or removed therefrom. In fact, the pallet truck, coming into contact with the device of the present invention, causes a movement of the shafts and of the wheels constrained to the shafts.

No external power supply such as electric or pneumatic or hydraulic supply is therefore required.

In addition, by means of the device of the present invention, it is not necessary to select the stacking or unstacking function, because the movements necessary for one or the other action are automatically activated without any selection by the operator: if a pallet is inserted, then it is automatically stacked, otherwise, if only the pallet truck is inserted, then a pallet is picked up from the stack.

Furthermore, the device of the present invention allows the withdrawal of the entire pallet stack or only a part of it, as well as the storage of one or more pallets stacked one on top of the other.

The device for moving pallets of the present invention can be used in particular with pallet trucks (usually less common on the market) capable of lifting a pallet or a pallet stack even beyond a standard height, for example up to about 250 mm. According to a preferred embodiment, said first and second shaft are connected one each other by a fitting device at the rear element.

In this way, the first shaft rotates in the opposite direction with respect to the second shaft, and vice versa.

According to the invention, each of said ratchet wheels is able to rotate integrally with a corresponding first and second petal wheel, each provided with petal engagement elements, such as protuberances radially arranged towards the outside of the wheel itself, and wherein the pitch between one petal and the other one is such as to allow one petal at a time to be inserted into a cavity laterally formed in a reference pallet.

In this way, said ratchet wheel is adapted to engage/disengage with a stop tooth in order to support said pallet stack or to release it to allow its descent.

According to a preferred embodiment, the device of the present invention further comprises one lever for each of said stop tooth with which the lever engages to allow the rotation of said ratchet wheel.

According to a preferred embodiment, the device of the present invention further comprises a pin operable by said lever and arranged along a cam path.

In this way, the pin allows the ratchet tooth to be disengaged from the ratchet wheel to allow it to rotate clockwise and therefore the pallet stack to descend.

According to the invention, the device also comprises at least one substantially horizontal arranged lifting bar, transversely disposed with respect to said first and second side element, at said opening, and such as to be constrained at one of its first ends with said at least one first shaft and at a second end thereof, opposite said first end, with said at least one second shaft, wherein said lifting bar is able to be vertically moved downwards or upwards in such a way to cause the consequent rotation of each of said first and second shaft and of the corresponding ratchet wheel integral with it so that the consequent displacement of said engagement elements of said first and second petal wheel allows, respectively, the mechanical lifting or lowering of said reference pallet.

In this way, the rotation of each shaft, once activated by the lifting/lowering of the lifting bar, causes the corresponding upward/downward displacement of the petal of the petal wheel which disengages from the pallet to which it was attached. According to a preferred embodiment, the device of the present invention further comprises, for each of said first and second shaft, a multiplier system associated therewith, able to rotate said petal wheel according to said displacement of said lifting bar, wherein said multiplier system consists at least of a rack, a toothed wheel and a free wheel provided with teeth system, wherein said free wheel is connected to the corresponding shaft with which said multiplier system is associated.

In this way, said multiplier system allows the rotation of the petal wheel which in about 20 mm of stroke allows a pallet to be lifted to a height equal to its height.

Thanks to the presence of the lifting bar and of the multiplier system connected to it, the device of this preferred embodiment of the present invention can also be used by pallet trucks, typically available on the market, capable of lifting the pallet stack up to a pre-established maximum height, typically up to 190/200 mm.

According to a preferred embodiment, said toothed wheel is provided with an anti-return lever.

In this way, the anti-return lever is able to clockwise freely rotate said toothed wheel with respect to said free wheel, or to drag it by gripping said teeth system if it rotates in the opposite direction.

According to a preferred embodiment, said multiplier system further comprises an abutment integral with said lifting bar.

In this way, said abutment allows the rotation of the anti-return lever so as to free up said teeth system from engagement and consequently allowing the clockwise rotation of said free wheel with respect to the toothed wheel to allow complete descent of the pallet stack.

According to a preferred embodiment, said lifting bar is placed at a height with respect to the support surface of the device which is greater than the height of said reference pallet.

In this way, when the lifting bar is in the lower position, its height from the ground of about 170 mm allows the insertion of a new pallet and, subsequently, its lifting together with the entire pallet stack above it.

Additional features and advantages of the present invention will be better highlighted by examining the following detailed description with the support of the attached drawings, wherein:
- Figure 1a is an axonometric view of a first embodiment of a device not according to the present invention;
- Figure 1b shows the same view of Figure 1a wherein the parts not visible in Figure 1a are hatching highlighted;
- Figure 2 is an axonometric view of the device of Fig. 1 inside which a pallet stack is arranged;
- Figure 3 is an axonometric detail of the device of Fig. 1a, wherein the wheel assembly formed by petal wheel, ratchet wheel and free wheel is shown;
- Figure 4 is a side view showing the pallet stack of Fig. 2 and the petal wheels of Fig. 1-3;
- Figure 5 is a front view showing in details the ratchet wheel and the petal wheel of Fig. 3;
- Figures 6-9 show the front views of various sequential phases for loading pallets;
- Figures 10-12 show the front views of various sequential phases for unloading pallets;
- Figure 13 is an axonometric view of a second embodiment of a device according to the present invention, wherein a lifting bar is visible;
- Figure 14 is a detail of Figure 13 wherein the multiplier system is shown;
- Figure 15 is an axonometric view of the device of Fig. 13 inside which a pallet stack is arranged;
- Figure 16 is a front view of the wheel assembly of Fig. 14;
- Figure 17 is a detail of the anti-return lever shown in Fig. 16;
- Figures 18-21 show the front views of various sequential phases for loading pallets using the device of Fig. 13;
- Figures 22-29 show the front views of various sequential phases for unloading pallets using the device of Fig. 13.

### Detailed description

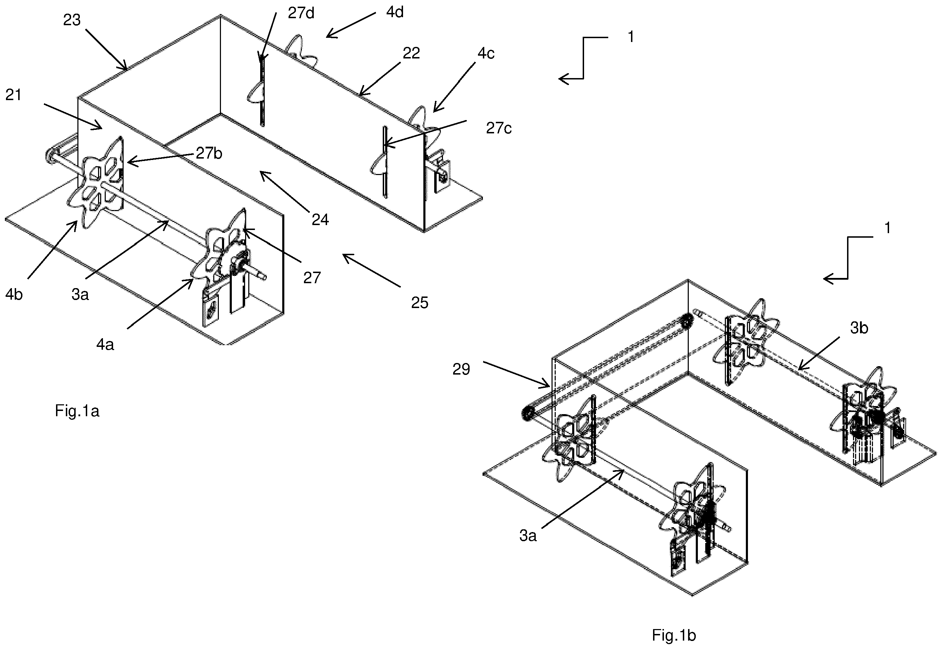

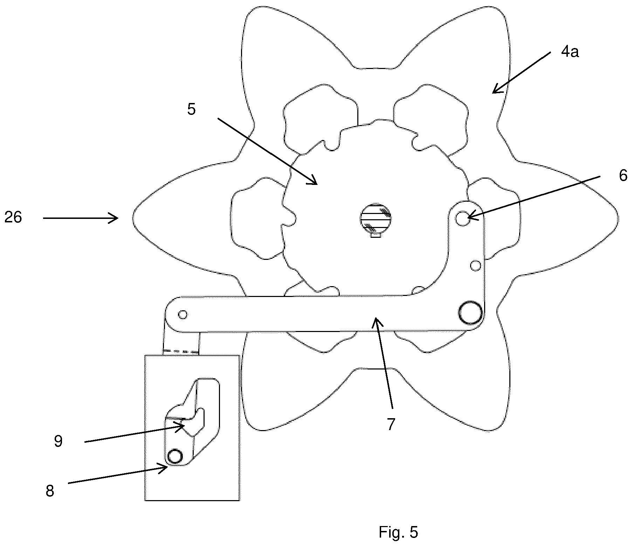

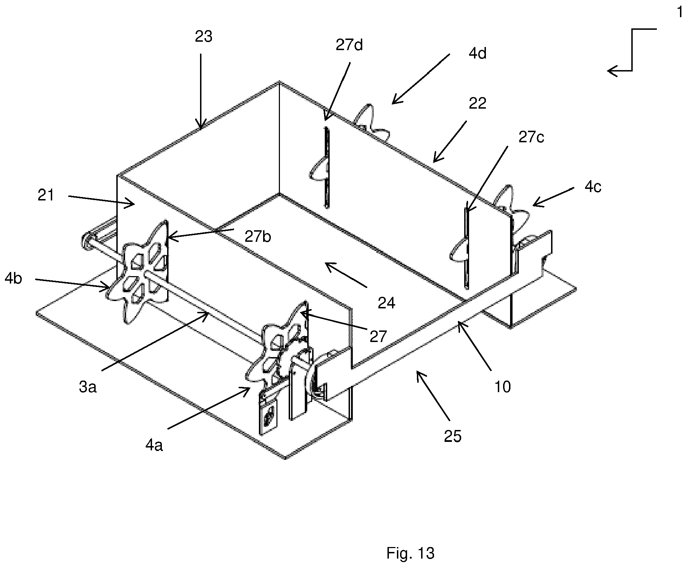

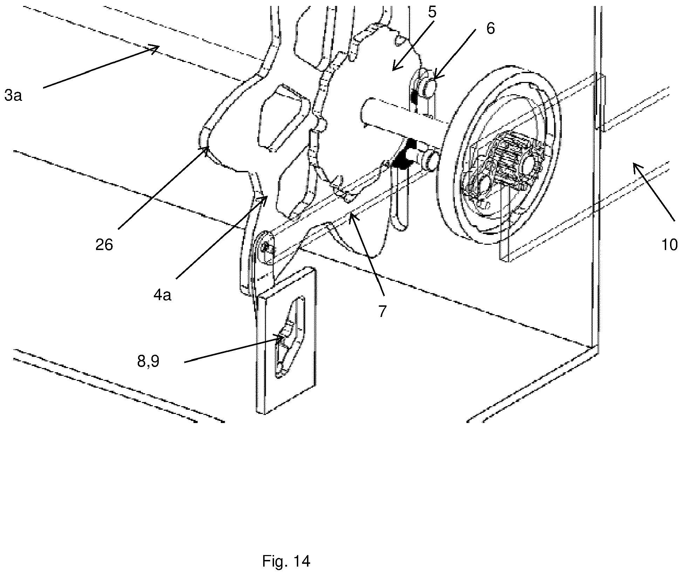

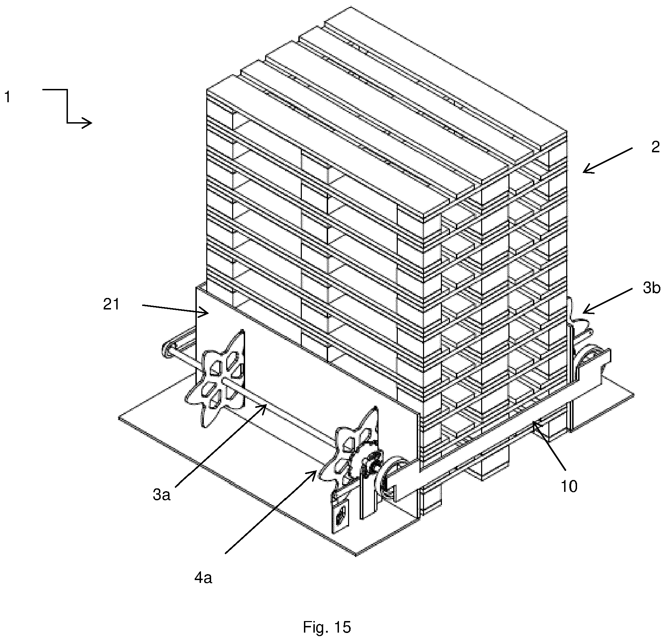

The following detailed description refers to a first embodiment not according to the invention shown with reference to Figures 1-12 and to a second embodiment according to the invention shown with reference to Figures 13-29.

### First embodiment

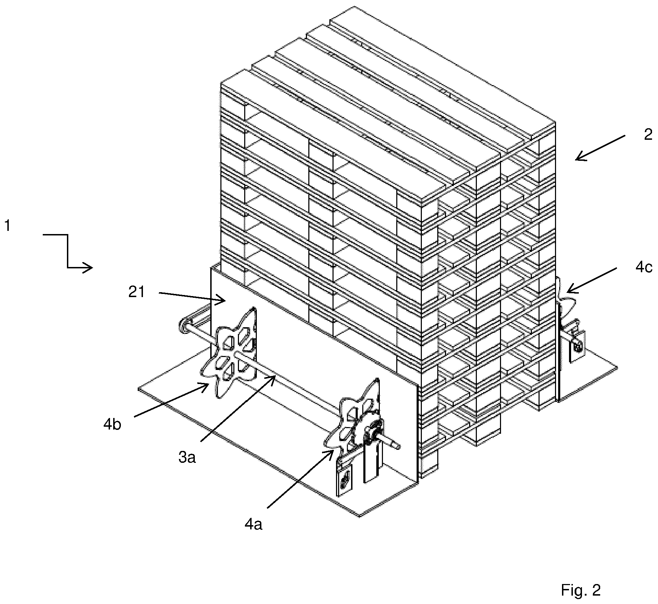

In particular, in the first embodiment, Figures 1a and 1b show the device 1 suitable for containing therein the pallet stack 2 (Figure 2); in detail, the device 1 has a central body consisting of a first side element 21, a second side element 22, parallel to each other, and a rear element 23 for connecting the side elements 21, 22 so as to delimit an empty area 24 in between them suitable to contain a plurality of pallets 2 stacked one on top of the other. The central body of the device 1 is also provided with an opening 25 between the side elements 21, 22 on the opposite side of the rear element 23 so as to substantially assume the shape of a U, wherein the opening 25 allows the passage of at least one pallet 2 for its/their insertion/removal in/from the empty area 24.

Figures 1-3 show a first shaft 3a arranged in the lower part of the device 1, along the first side element 21 towards the outside with respect to the area 24 suitable for containing the pallets 2; similarly, a second shaft 3b visible in Figure 1b is positioned along the second side element 22, towards the outside. In the embodiment shown in Figure 1b, the two shafts 3a and 3b are connected to each other by means of the connector 29 at the rear element 23, so that the shaft 3a rotates in the opposite direction with respect to the other shaft 3b.

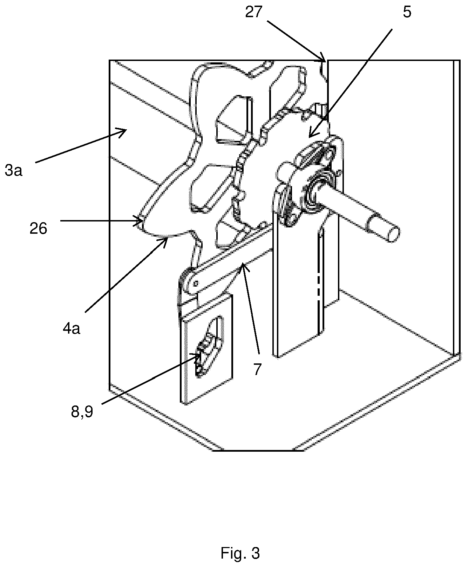

A wheel assembly is mounted on each of the shafts 3a and 3b (shown in detail in Figures 3-5) with different functions. In particular, Figures 1a and 1b show the presence of a) a first petal wheel 4a and a ratchet wheel 5, integral with each other, arranged at a first end of the first shaft 3a, on the side of the opening 25, and of b) a second petal wheel 4b, arranged on the same first shaft 3a, at its opposite end. Both the petal wheels 4a and 4b are integral with the rotation of the first shaft 3a; therefore, the rotation of the shaft 3a simultaneously determines the rotation of the two petal wheels 4a, 4b and of the ratchet wheel 5.

Similarly, the same wheel assembly is also mounted on the second shaft 3b. In particular, Figures 1a and 1b show the petal wheel 4c and a ratchet wheel 5, integral with each other, arranged at a first end of the second shaft 3b, on the side of the opening 25, and a second petal wheel 4d, arranged on the same second shaft 3b, at its opposite end.

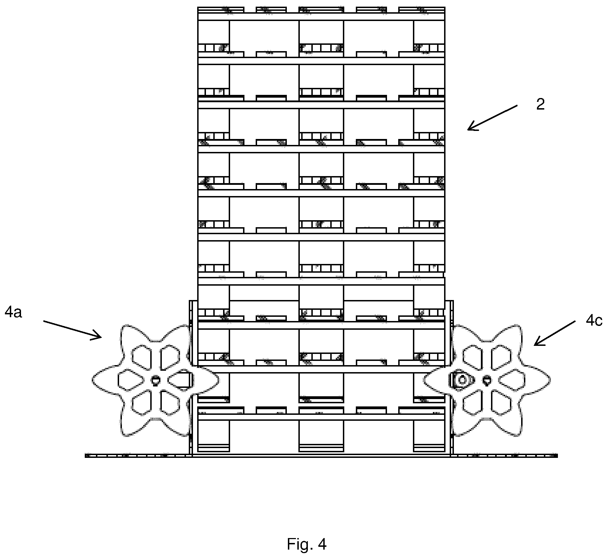

The petal wheel 4 in the specific case shown in Figures 4-12 has six petals 26, although, in other embodiments, the number of petals may be different, without changing the functional aspect. A petal 26 of each of the petal wheels 4a, 4b is able to fit into the corresponding slots 27, 27b formed along the height of the first side element 21; similarly, a petal 26 of each of the petal wheels 4c, 4d is able to fit into the corresponding slots 27c, 27d formed along the height of the second side element 22.

The ratchet wheel 5 (shown in detail in Figures 3-5) engages with the ratchet tooth 6 to support the pallet stack 2 or is released from it to allow the descent of one or more pallets 2. The ratchet tooth 6 operates the pin 8 by means of the lever 7 along the cam path 9.

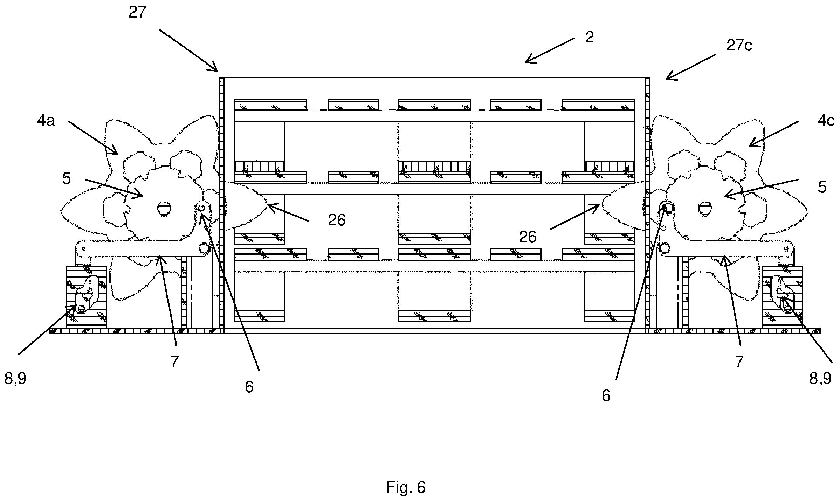

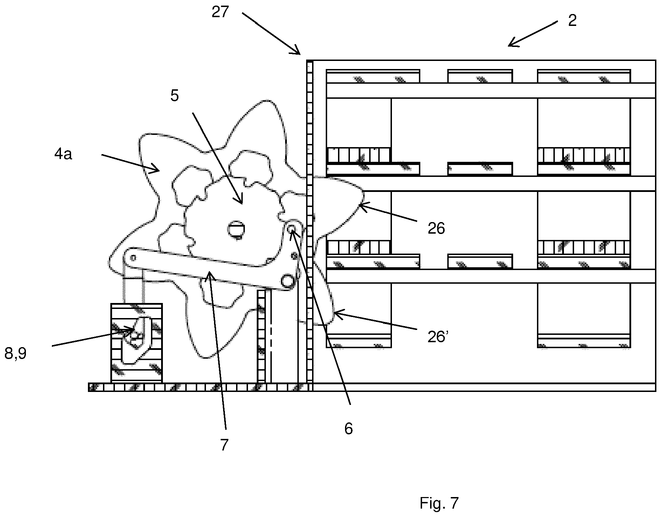

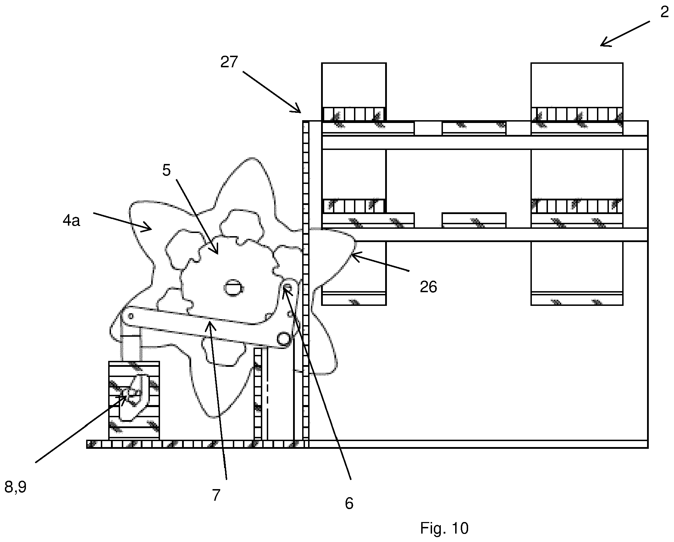

Operatively, the device 1 of the first embodiment acts in the manner described below where, with reference to Figures 6-9, the Steps 1.1-1.4 refer to the loading operation of a pallet 2 in a stack. Figure 6 shows a side view wherein both the wheel assembly on the left of the pallet stack 2, which includes the petal wheel 4a and the corresponding ratchet wheel 5, and the wheel assembly on the right of the pallet stack 2, which comprises the petal wheel 4c and the corresponding ratchet wheel 5, are visible, the two wheel assemblies being substantially identical. Vice versa, for the sake of simplicity, Figures 7-12 show only the wheel assembly comprising the petal wheel 4a. With reference to Figures 10-12, Phases 1.5-1.7 refer to the unloading operation of one or more pallets 2 from the stack itself.

### PHASE 1.1: figure 6 - loading phase start

Figure 6 shows the pallet stack 2 raised, the ratchet tooth 6 engaged, the pin 8 in the lower position, and an entrance opening of about 170mm such as to allow a new pallet to be inserted and raised.

### STEP 1.2: figure 7

The new inserted pallet is raised; in a first phase, going up, it pushes any pallet already present upwards; the upper axis of the pallet (or the lower axis of the pallet already present) comes up against the lower side of the petal 26 by rotating the petal wheel 4 which drags the shaft 3 and the ratchet wheel 5. The ratchet wheel 5 rotates the lever 7 which raises the pin 8 along the forward path of the cam 9 to the intermediate position. Meanwhile, a new petal 26' of the petal wheel 4, adjacent to the petal 26 above, is being inserted inside the pallet 2 just inserted therein.

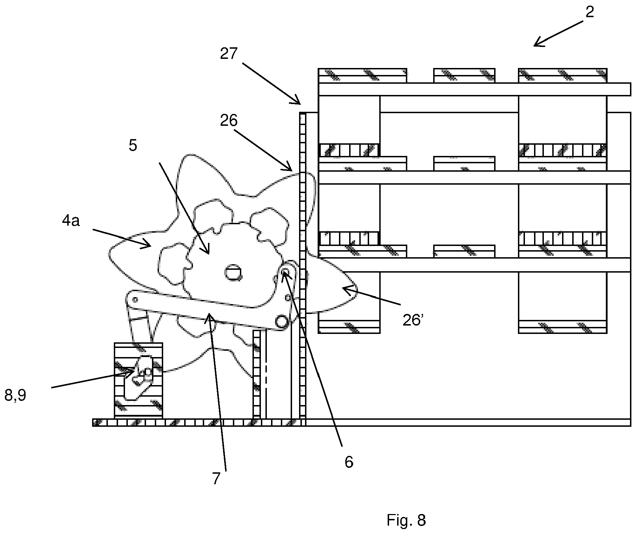

### STEP 1.3: figure 8

In a second phase, the lifting of the new inserted pallet 2 proceeds; the rotation of the petal wheel 4, and therefore the rotation of the ratchet wheel 5, again move the lever 7 which firstly lifts the pin 8 further along the cam path 9 up to the high position passing the end, then lowers it along the return of the same cam path 9. As the rotation proceeds, the ratchet wheel 5 presents a new coupling point inside which the ratchet tooth 6 "falls".

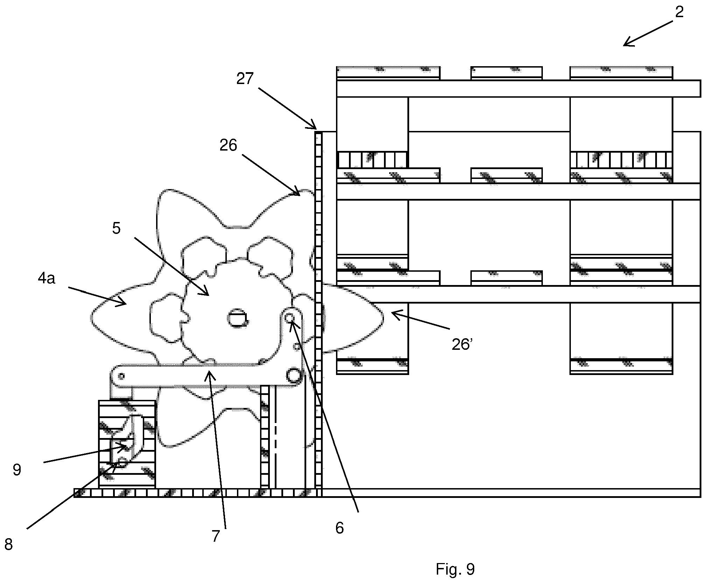

### PHASE 1.4: figure 9 - loading phase end

At this point, letting the pallet truck go down, the weight of the pallet stack 2, which then integrates the new pallet, causes the petal wheel 4 and the ratchet wheel 5 to rotate in the opposite direction, the latter becoming locked as it hooks to the ratchet tooth 6. The pallet truck is thus made weight free and can be extracted, the entire pallet stack 2 being supported by the system now; a new pallet may be inserted therein or the one just inserted may be withdrawn.

### PHASE 1.5: figure 10 - unloading phase start

Starting from the position in PHASE 1.4 (pallet stack 2 raised, ratchet tooth 6 hooked, pin 8 in the lower position, entry opening of about 170 mm) the pallet truck can be inserted to pick up a pallet. As the pallet truck goes up, it comes up against the lower pallet 2 and lifts the whole stack. The lower axis of the pallet 2 at the base of the stack come up against the petal 26 of the petal wheel 4, causing its rotation. As in the pallet insertion phase, the petal wheel 4 drags the shaft 3 and the ratchet wheel 5. The ratchet wheel 5 rotates the lever 7 which lifts the pin 8 along the forward path of the cam 9 to the intermediate position.

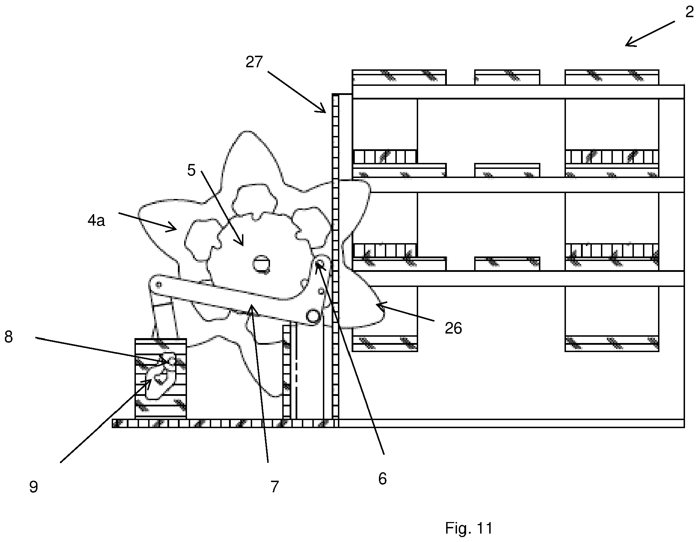

### STEP 1.6: figure 11

At this point, by letting the pallet truck go down, the entire pallet stack 2 goes down and the petal wheels 4 and ratchet 5 rotate in the opposite direction. The ratchet wheel 5 shows the coupling point in correspondence with the ratchet tooth 6, which however does not engage because it is kept raised by the pin 8 and by the lever 7, thus allowing the ratchet wheel 5 to continue its rotation and therefore the descent of the pallet stack 2. Continuing in the rotation that accompanies the descent of pallet stack 2, the ratchet wheel 5 again moves the lever 7 which firstly raises the pin 8 further along the cam path 9 up to the high position to pass the end, then lowers it along the return of the same cam path 9.

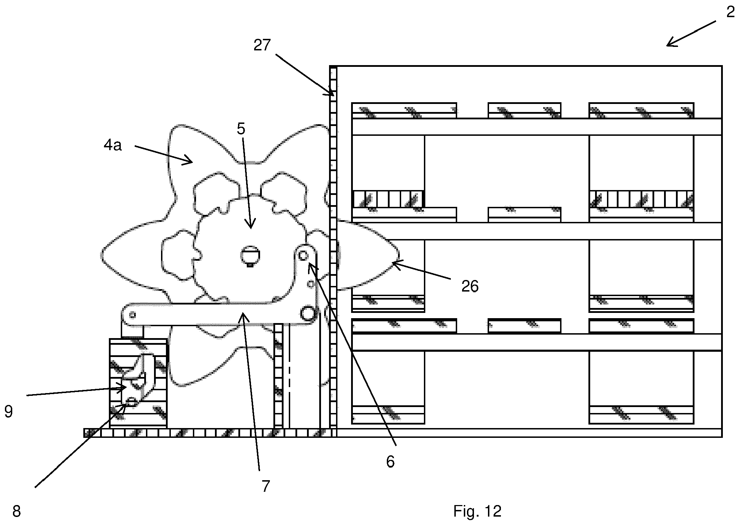

### PHASE 1.7: figure 12 - unloading phase end

Continuing the descent and rotation, the ratchet wheel 5 presents a new coupling point inside which the ratchet tooth 6 "falls". In the meantime, the petal 26 of the petal wheel 4 which was inserted in the lower pallet 2 is removed from the pallet itself. At this point, the ratchet wheel 5 and the petal wheel 4 lock, preventing the stack from descending, which then releases the lower pallet 2 which is supported by the pallet truck. When the lower pallet is sufficiently detached from the upper pallet but not yet resting on the ground, it can be extracted by removing the pallet truck.

In this way, the device of the first embodiment shown in detail with reference to Figures 1-12 uses only mechanical elements and means (shafts, petal wheels, ratchet wheels, pins, engagement elements), without the use of any electrical, pneumatic or hydraulic component. Furthermore, the movements necessary to stack and unstack the pallets are directly derived from the movement of the pallet truck, by which the pallet itself is inserted therein or removed therefrom. In fact, the pallet truck, coming into contact with the device, causes a movement of the shafts and of the wheels constrained to the shafts. No external power supply is therefore required, such as electric, pneumatic or hydraulic.

In addition, by means of the device, it is not necessary to select the stacking or unstacking function, because the movements necessary for one or the other action are automatically activated without any selection by the operator: if a pallet is inserted, then it is automatically stacked, otherwise, if only the pallet truck is inserted, then a pallet is picked up from the stack.

Furthermore, the device allows the withdrawal of the entire pallet stack or only a part of it, as well as the storage of one or more pallets stacked one on top of the other.

### Second embodiment

With reference to Figures 13-29, a second embodiment according to the invention is shown.

To the device of the first embodiment, described above with reference to Figures 1-12, a lifting bar 10 and a multiplier system are added here in this second embodiment, as shown in detail in Figures 13 -17.

The lifting bar 10 is arranged substantially horizontal, transversely with respect to the first and second side elements 21,22, in correspondence with the opening 25, at a height from the support surface of the device 1 sufficient to allow the passage of a pallet 2 below it (see in particular Figures 13-15).

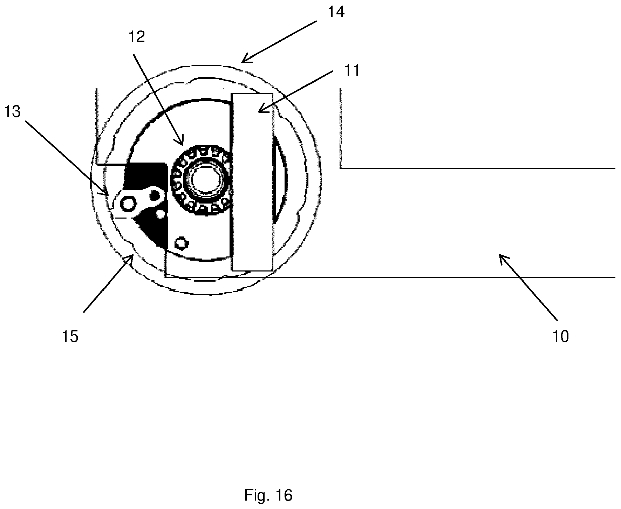

The multiplier system consists of a rack 11, a toothed wheel 12 equipped with a non-return lever 13 and a free wheel 14 equipped with a teeth system 15 and connected to the shaft 3 (see in particular Figure 16).

The lifting bar 10 engages with the shaft 3 so as to determine its rotation and, consequently, the rotation of the petal wheel 4, when the bar 10 is lifted by a pallet truck or by other similar mechanical device (not shown in the figures). The petal wheel 4 in this way raises the pallets 2 beyond the maximum height normally reachable by the pallet truck.

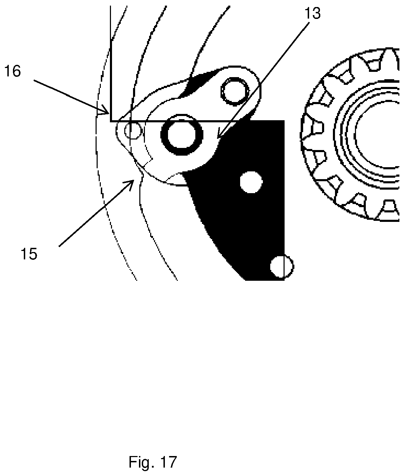

The anti-return lever 13 freely rotates the toothed wheel 12 clockwise with respect to the free wheel 14 (see Figure 16 in detail), on the contrary it drags it if it rotates in the opposite direction by gripping the teeth system 15. Near the lower position of the lifting bar 10, an abutment 16 integral with it (see Figure 17 in detail) comes up against the anti-return lever 13 making it rotate and freeing the teeth system 15, thus allowing clockwise rotation of the free wheel 14 with respect to the toothed wheel 12 for the complete descent of the pallet stack 2.

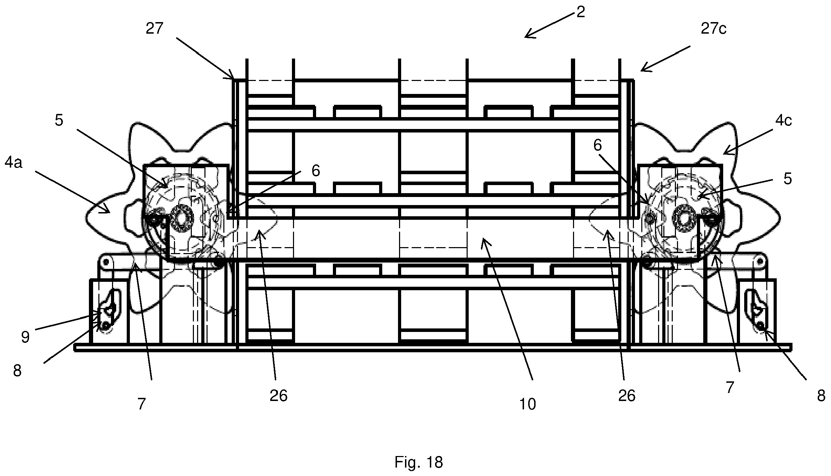

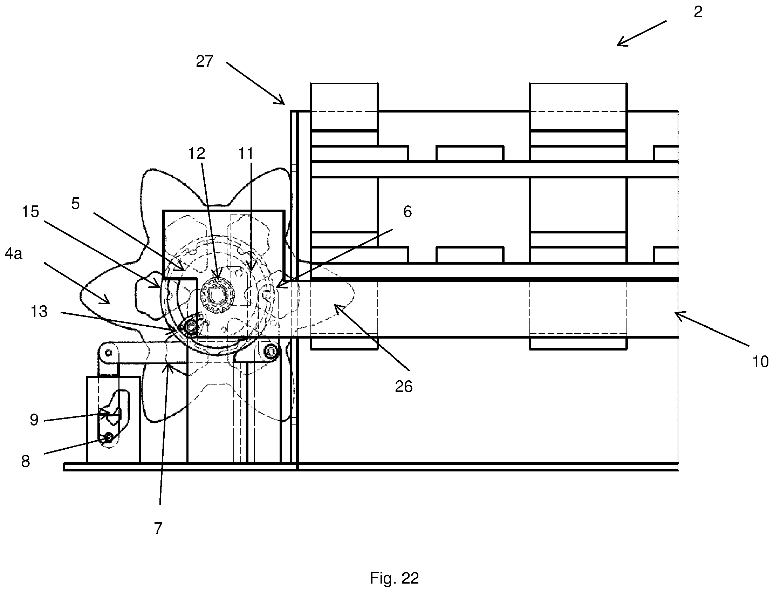

Operatively, the device 1 of the second embodiment acts in the manner described below where, with reference to Figures 18-21, Phases 2.1-2.4 refer to the loading operation of a pallet 2 in a stack, while, with reference to Figures 22-29, Phases 2.5-2.12 refer to the unloading operation of one or more pallets 2 from the stack itself.

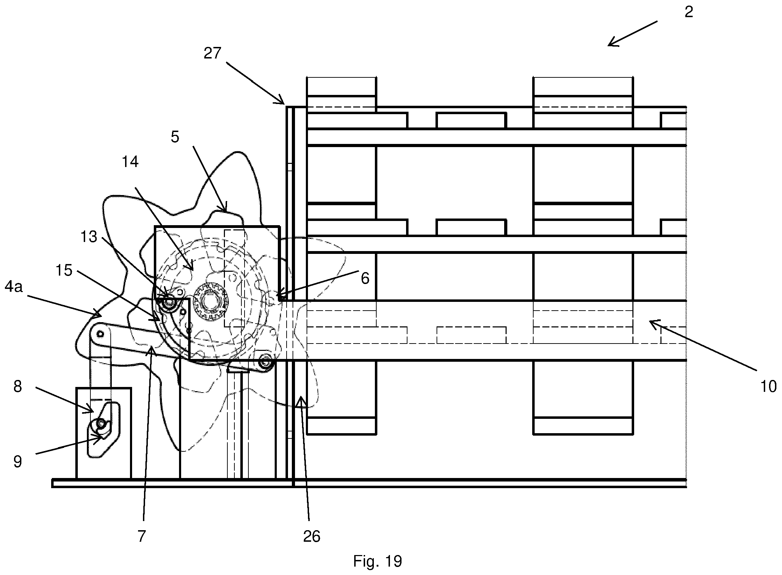

Figure 18 shows a side view wherein both the wheel assembly on the left of the pallet stack 2, which includes the petal wheel 4a and the corresponding ratchet wheel 5, and the wheel assembly on the right of the pallet stack 2, which comprises the petal wheel 4c and the corresponding ratchet wheel 5, are visible, the two wheel assemblies being substantially identical. Vice versa, for the sake of simplicity, Figures 19-29 only show the wheel assembly comprising the petal wheel 4a.

### PHASE 2.1: figure 18 - pallet loading start

Figure 18 shows the pallet stack 2 raised, the ratchet tooth 6 engaged, the pin 8 in the lower position, the lifting bar 10 in the lower position, an entrance opening of about 170 mm such as to allow a new pallet to be inserted therein and raised.

### STEP 2.2: figure 19

The new pallet 2 is inserted and raised until the forks of the pallet truck come up against the lifting bar 10 which lifts the entire pallet stack 2; in this phase the lower axis of the upper pallet, coming up against the petal 26, rotates the petal wheel 4a which drags the shaft 3, the ratchet wheel 5 and the free wheel 14. The ratchet wheel 5 rotates the lever 7 which raises the pin 8 along the forward path of the cam 9 up to the intermediate position; the freewheel 14 rotates until the teeth system 15 passes the anti-return lever 13 which rotates and returns to its position. From this moment on, the thrust of the pallet truck directly acts on the lifting bar 10.

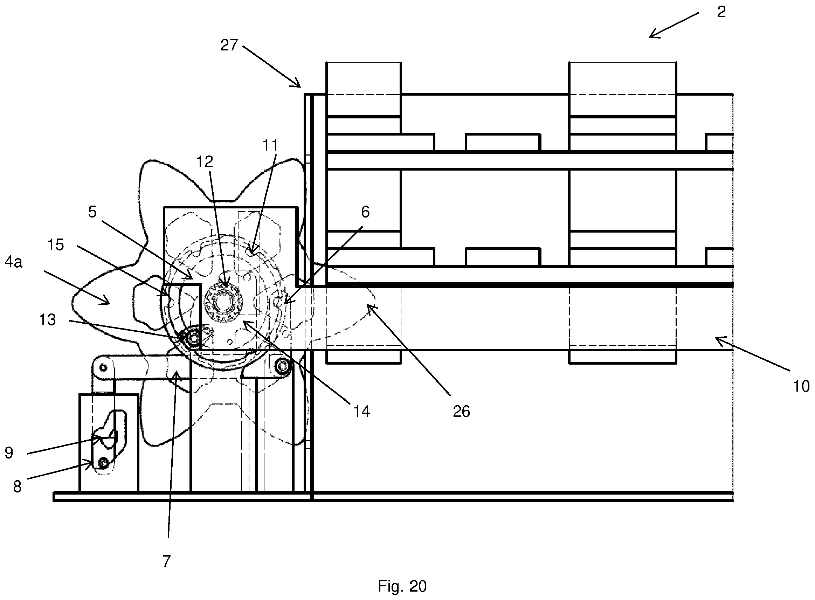

### STEP 2.3: figure 20

The pallet truck pushes the lifting bar 10 upwards which by the rack 11 rotates the toothed wheel 12 which, by means of the anti-return lever 13, grips the teeth system 15 of the free wheel 14, allowing the last one and, consequently, the shaft 3 and the petal wheel 4a, to counterclockwise rotate thus causing the further lifting of the whole pallet stack 2. During rotation, the ratchet wheel 5 moves the lever 7 which firstly raises the pin 8 further along the path cam 9 up to the high position to pass the tip and then lowers it along the return of the same cam path 9. The rotation generated by the thrust on the bar 10 is such that the ratchet wheel 5 presents a new coupling point where the tooth ratchet 6 engages with to support the whole pallet stack 2 which then integrates the new pallet 2.

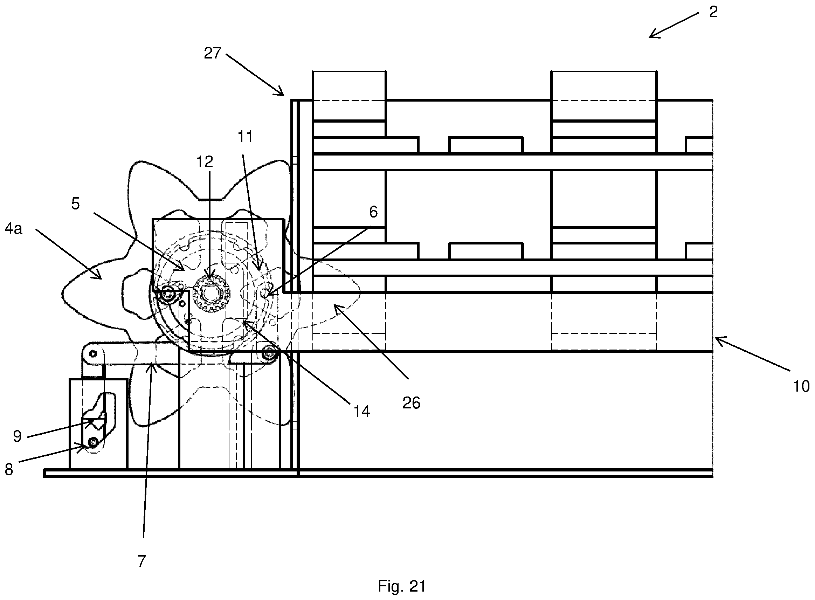

### PHASE 2.4: figure 21 - pallet loading end

Letting the pallet truck go down, it accompanies the descent of the lifting bar 10 only to its lowest position; during this descent the rack 11 rotates the toothed wheel 12 in a clockwise direction, therefore without dragging the free wheel 14. At this point, a new pallet 2 can be inserted therein or removed therefrom.

### PHASE 2.5: figure 22 - pallet unloading start

Starting from the position in PHASE 2.4 (pallet stack 2 raised, ratchet tooth 6 hooked, pin 8 and lifting bar 10 in the lower positions, entrance opening such as to allow the insertion of the pallet truck to pick up a pallet 2), the pallet truck is raised; the latter comes up against the lifting bar 10 which rotates the toothed wheel 12 by means of the rack 11. The anti-return lever 13 does not engage the teeth system 15 because this is located before the lever itself along the rotation path. This part of the climb is therefore in neutral gear.

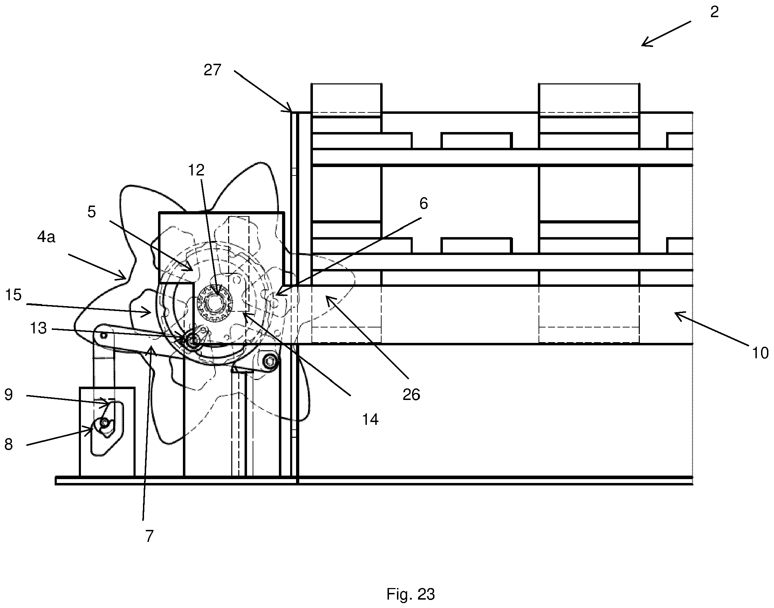

### STEP 2.6: figure 23

While the pallet truck goes on to raise, the toothed wheel 12 continues to rotate, the anti-return lever 13 comes up against the teeth system 15 of the free wheel 14, allowing all the elements on the axis, petal wheel 4a and wheel ratchet 5, to start rotating. The petal wheel 4a allows the pallets 2 to rise and the ratchet wheel 5 pushes the lever 7 which raises the pin 8 along the forward path of the cam 9 up to the intermediate position, locking the lever 7 in this position. At this time all the load is supported by the lifting bar 10.

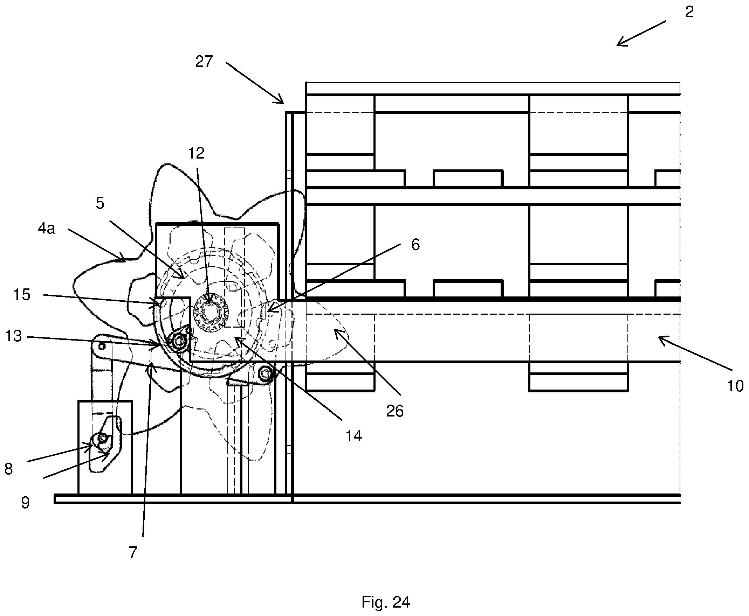

### STEP 2.7: Figure 24

By lowering the pallet truck, the whole system starts moving: the weight of the pallet stack 2 pushes the petal wheel 4a downwards causing therefore its clockwise rotation which, by the shaft 3, drives the free wheel 14 which, in turn, by the anti-return lever 13 hooked to the teeth system 15, causes the rotation in the same direction of the toothed wheel 12 which pushes the lifting bar 10 downwards. In the first rotation phase the ratchet tooth 6 is detached from the ratchet wheel 5 and then passes the coupling point. The pin 8 maintains the tooth in a detached position, locked in the intermediate position of the cam 9.

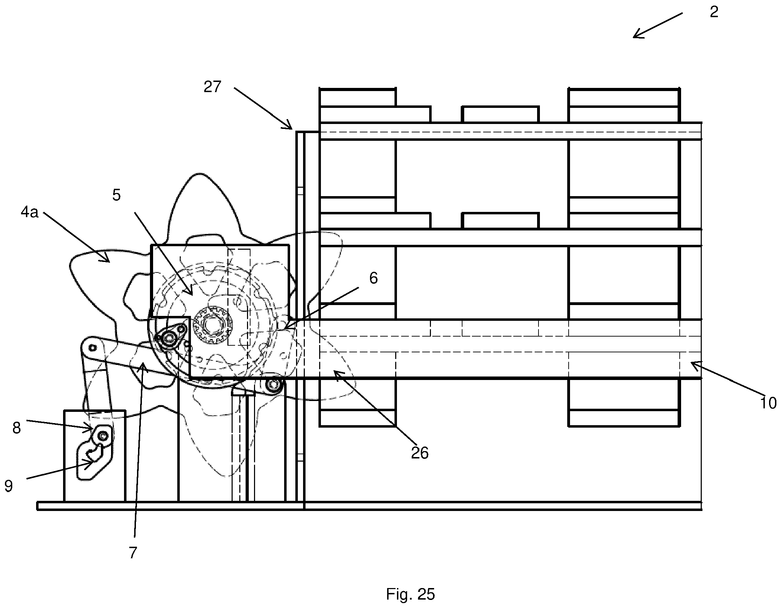

### STEP 2.8: figure 25

Continuing in the descent and consequently in the rotation phase, the ratchet tooth 6 encounters a protrusion in the ratchet wheel 5 which further rotates the lever 7 and further raises the pin 8 along the forward path in the cam 9 allowing it to reach the high and inversion position.

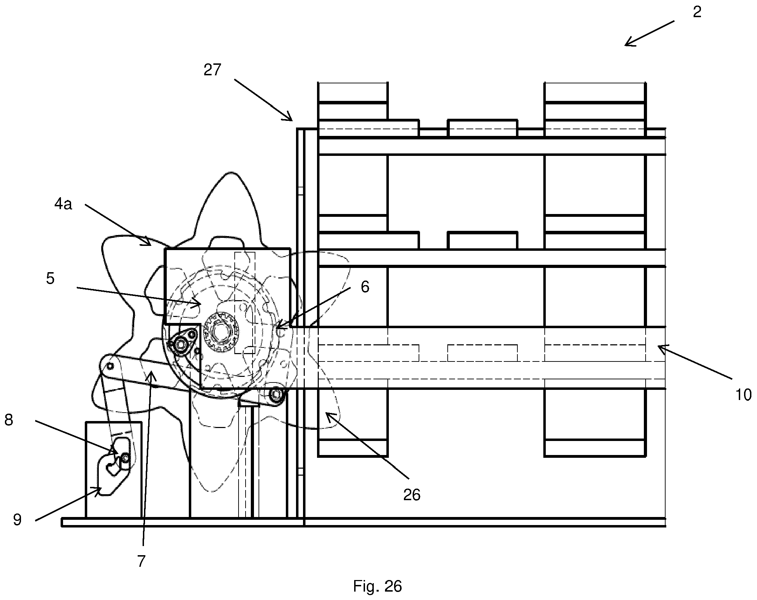

### STEP 2.9: figure 26

Continuing in the descent and consequently in the rotation phase, the ratchet lever 7 leaves the projection and pushes the pin 8 along the return path of the cam 9.

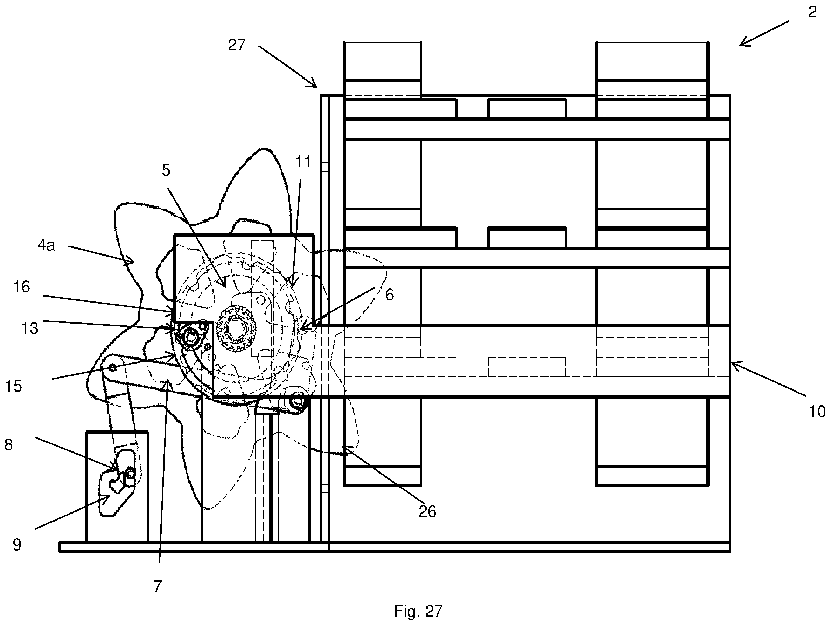

### STEP 2.10: figure 27

Continuing in the descent and consequently in the rotation phase, the lower part of the pallet 2 reaches the forks of the pallet truck; from this moment on the weight of the pallet stack 2 rests directly on the pallet truck thus weight relieving the lifting bar 10, the rack 11 and the anti-return lever 13 in the following millimeters of downward stroke. Precisely in this phase, the lever 13, moving upwards, comes up against the abutment 16 integral with the lifting bar 10 moving downwards. In the following millimeters of stroke, the abutment 16 rotates the lever 13 in an anticlockwise direction thus going out of the engagement range of the teeth system 15, the lifting bar 10 comes to rest on the bottom at the stroke end.

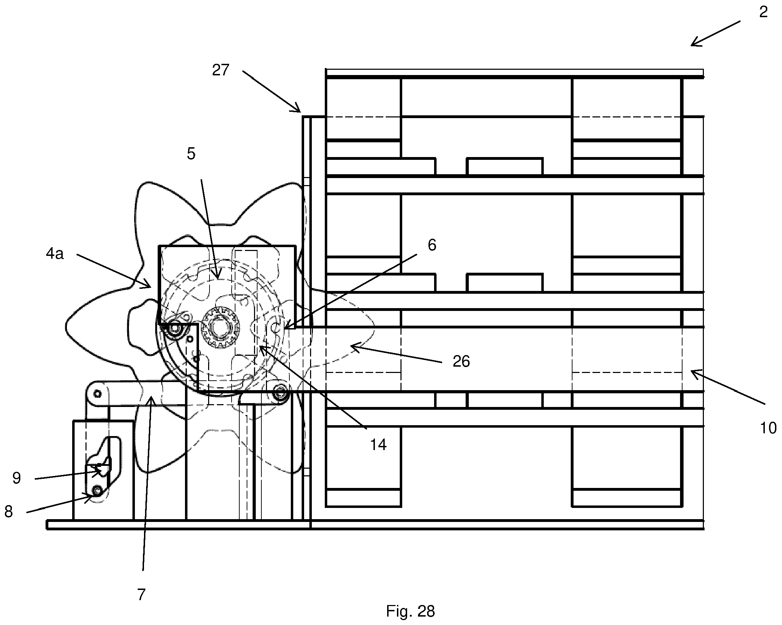

### STEP 2.11: figure 28

At this point the descent of the pallet stack 2, restrained by the pallet truck, causes the petal wheel 4a, the ratchet wheel 5 and the free wheel 14 to rotate; during this rotation, the ratchet tooth 6 approaches the coupling point, thus blocking the whole system; the pin 8 completes the return stroke in the cam 9 down to the bottom, resetting itself.

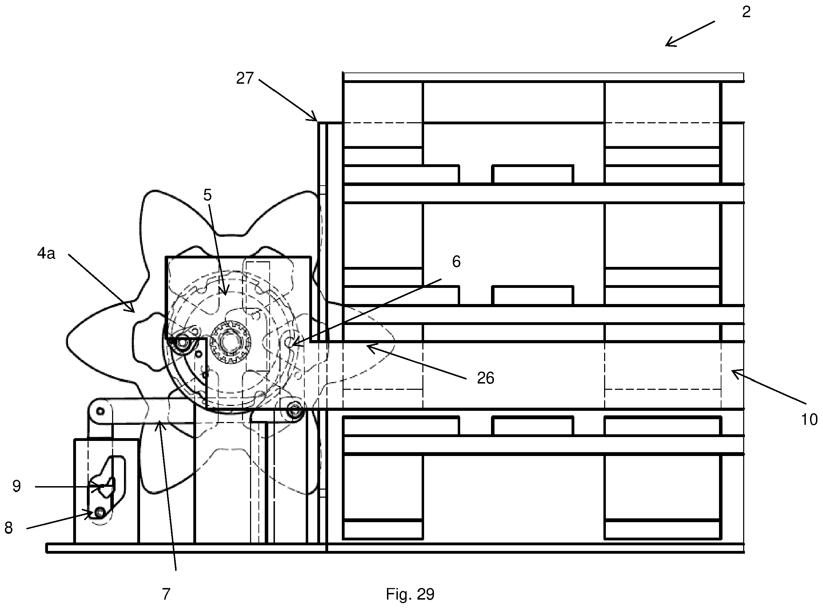

### PHASE 2.12: figure 29 - pallet unloading end

The last descent phase of the pallet truck accompanies the pallet 2 detachment which, when it is lower than the lifting bar 10 but not yet resting on the ground, can be extracted.

The device of the second embodiment described above, thanks to the use of a system that multiplies its lifting stroke, allows to use a normal manual pallet truck, whose stroke would otherwise be limited in the use of the system described above with reference to the first embodiment.

Therefore, the present invention is not limited to the preferred embodiment described, illustrated only by way of non-limiting example, but is defined by the following claims.

## Claims

1. Device (1) for moving pallets (2) comprising a central body consisting of a first side element (21) and a second side element (22), parallel one each other, and a rear element (23) for connecting the side elements (21,22) one each other so as to delimit an empty area (24) in between them adapted to contain a plurality of pallets (2) stacked one above the other, wherein said central body is further provided with an opening (25) between said side elements (21,22) on the opposite side of said rear element (23) so as to substantially assume a U-shape, wherein said opening (25) is able to allow the passage of at least one pallet (2) for its/their insertion/removal into/from said empty area (24),
wherein said device (1) is further provided with:
- at least one first shaft (3a) arranged along said first side element (21) and at least one second shaft (3b) arranged along said second side element (22), said shafts (3a,3b) being both arranged towards the outside of the device (1) with respect to said empty area (24);
- at least one first ratchet wheel (5a) able to integrally rotate with said first shaft (3a) and a second ratchet wheel (5b) able to integrally rotate with said second shaft (3b), wherein each of said ratchet wheels (5a, 5b) is adapted to engage/disengage with a corresponding stop tooth (6) to support said stack of pallets (2) or to release it (2) to allow it to descend,
wherein each of said ratchet wheels (5a, 5b) is able to integrally rotate with a corresponding first (4a) and second petal wheel (4b), each provided with petal engagement elements (26) and wherein the pitch between two successive petals (26) is such as to allow one petal (26) at a time to be inserted into a cavity laterally formed into a reference pallet (2)
**characterized in that**
said device (1) further comprises at least one substantially horizontally arranged lifting bar (10), transversely disposed with respect to said first (21) and second side elements (22) at said opening (25), and able to be constrained with said at least one first shaft (3a) at one of its first ends, and with said at least one second shaft (3b) at a second end thereof, opposite to said first end, wherein said lifting bar (10) is able to be vertically moved downwards or upwards so as to cause the consequent rotation of each of said first (3a) and second shaft (3b) and of the corresponding ratchet wheel (5a, 5b) integral with it so that the consequent displacement of said engagement elements (26) of said first (4a) and second petal wheels (4b) allows, respectively, the mechanical lifting or lowering of said reference pallet (2).

2. Device (1) according to claim 1, wherein said first (3a) and second shaft (3b) are connected one each other by a fitting device (29) at the rear element (23), so that the first shaft (3a) rotates in the opposite direction to the second shaft (3b).

3. Device (1) according to any one of the preceding claims which further comprises one lever (7) for each of said stop tooth (6), engaging with it (6) to allow the rotation of said ratchet wheels (5a, 5b).

4. Device (1) according to claim 3 which further comprises a pin (8) operable by said lever (7) and arranged along a cam path (9).

5. Device (1) according to any one of the preceding claims which further comprises, for each of said first (3a) and second shaft (3b), a multiplier system associated therewith capable of rotating said petal wheels (4a, 4b) according to said displacement of said lifting bar (10), wherein said multiplier system consists at least of a rack (11), a toothed wheel (12) and a free wheel (14) provided with teeth system (15), wherein said free wheel (14) is connected to the corresponding shaft (3a, 3b) to which said multiplier system is associated.

6. Device (1) according to claim 5, wherein said toothed wheel (12) is provided with an anti-return lever (13) able to rotate said toothed wheel (12) in a clockwise direction relative to said free wheel (14), or to drag it by gripping said teeth system (15) if it rotates in the opposite direction.

7. Device (1) according to claim 6 wherein said multiplier system further comprises an abutment element (16) integral with said lifting bar (10) and adapted to rotate said anti-return lever (13) in a manner to free up said teeth system (15) and consequently allowing the clockwise rotation of said free wheel (14) with respect to said toothed wheel (12) to allow the complete descent of the pallet stack (2).

8. Device (1) according to any of the preceding claims 4-7 wherein said lifting bar (10) is placed at a height with respect to the supporting surface of the device (1) which is greater than the height of the reference pallet (2).

## Patentansprüche

1. Vorrichtung (1) zum Bewegen von Paletten (2), die einen zentralen Körper umfasst, der aus einem ersten Seitenelement (21) und einem zweiten Seitenelement (22), die parallel zueinander sind und einem hinterem Element (23) zum Verbinden der Seitenelemente (21,22), so dass zwischen ihnen ein leerer Bereich (24) begrenzt wird, um eine Vielzahl übereinander gestapelter Paletten (2) aufzunehmen, besteht, wobei besagter zentraler Körper weiter mit einer Öffnung (25) zwischen den besagten Seitenelementen (21,22) auf der gegenüberliegenden Seite des hinteren Elements (23) ausgestattet ist, so dass sich im Wesentlichen ein U-Form ergibt, wobei besagte Öffnung (25) den Durchlass mindestens einer Palette (2) für ihr Einsetzen/Entfernen in/von besagtem leeren Bereich (24) erlaubt,
wobei besagte Vorrichtung (1) weiter wie folgt ausgestattet ist:
- mit mindestens einem ersten Schaft (3a), der entlang besagtem ersten Seitenelement (21) angeordnet ist und mindestens einem zweiten Schaft (3b), der entlang besagtem zweiten Seitenelement (22) angeordnet ist, besagte Schäfte (3a,3b) sind in Bezug auf den besagten leeren Bereich (24) zur Außenseite der Vorrichtung (1) angeordnet;
- mit mindestens einem Schaltrad (5a), das sich mit besagtem ersten Schaft (3a) ganz drehen kann und einem zweiten Schaltrad (5b), das sich mit besagtem zweiten Schaft (3b) ganz drehen kann, wobei jedes der besagten Schalträder (5a, 5b) geeignet ist, um mit einem entsprechenden Anschlagzahn (6) aktiviert/deaktiviert zu werden, um besagten Palettenstapel (2) zu tragen oder ihn freizugeben (2), um sein Absenken zu ermöglichen,
wobei jedes der besagten Schalträder (5a, 5b) ganz mit einem entsprechenden ersten (4a) und zweiten Blattrad (4b) drehen kann, die jeweils mit Blatteingriffselementen (26) ausgestattet und wobei der Abstand zwischen zwei aufeinanderfolgenden Blättern (26) derart ist, das jeweils ein Blatt (26) in einen seitlichen Hohlraum, der seitlich in einer Referenzpalette (2) geformt ist, eingeführt werden kann,
ausgezeichnet dadurch, dass
besagte Vorrichtung (1) weiter wenigstens eine im Wesentlichen horizontal angeordnete Hebestange (10) umfasst, die quer in Bezug auf erste (21) und zweite besagte Seitenelemente (22) an besagter Öffnung (25) angeordnet ist und die mit besagtem mindestens einem ersten Schaft (3a) an einem ihrer ersten Enden und mit besagten wenigstens einem zweiten Schaft (3b) am zweiten Ende davon, gegenüber dem besagten ersten Ende gehemmt werden kann, wobei besagte Hebestange (10) vertikal nach unten oder nach oben bewegt werden kann, um die daraus folgende Drehung sowohl des besagten ersten (3a) als auch des zweiten (3b) Schafts und des entsprechenden in ihm fest eingebauten Schaltrads (5a, 5b) zu bewirken, so dass die daraus folgende Versetzung der besagten Eingriffselemente (26) des besagten ersten (4a) und zweiten Blattrads (4b) jeweils das mechanische Anheben oder Absenken der besagten Referenzpalette (2) erlaubt.

2. Vorrichtung (1) gemäß Anspruch 1, wobei besagter erster (3a) und zweiter Schaft (3b) durch eine Montagevorrichtung (29) am hinteren Element (23) miteinander verbunden sind, so dass der erste Schaft (3a) in die entgegengesetzte Richtung zum zweiten Schaft (3b) dreht.

3. Vorrichtung (1) gemäß einem der vorstehenden Ansprüche, die weiter einen Hebel (7) für jeden der besagten Anschlagzähne (6) umfasst, die in ihm eingegriffen sind (6), um die Drehung der besagten Schalträder (5a, 5b) zu erlauben.

4. Vorrichtung (1) gemäß Anspruch 3, die weiter einen Stift (8) umfasst, der durch besagten Hebel (7) betätigt werden kann und entlang einer Nockenbahn (9) angeordnet ist.

5. Vorrichtung (1) gemäß einem der vorstehenden Ansprüche, die weiter für sowohl den ersten (3a) als auch zweiten Schaft (3b) ein Multiplikatorsystem umfasst, das damit verbunden ist, das in der Lage ist, besagte Blatträder (4a, 4b) gemäß der besagten Versetzung der besagten Hebestange (10) zu drehen, wobei besagtes Multiplikatorsystem mindestens aus einem Gestell (11), einem Zahnrad (12) und einem Freilauf (14) besteht, das mit einem Zahnsystem (15) ausgestattet ist, wobei besagter Freilauf (14) mit dem entsprechenden Schaft (3a, 3b) verbunden ist, dem besagtes Multiplikatorsystem zugeordnet ist.

6. Vorrichtung (1) gemäß Anspruch 5, wobei besagtes Zahnrad (12) mit einem Rücklaufhebel (13) ausgestattet ist, der besagtes Zahnrad (12) im Uhrzeigersinn in Bezug zum besagten Freilauf (14) drehen kann oder um es durch Einspannung des besagten Zahnsystems (15) zu ziehen, wenn es sich in entgegengesetzte Richtung dreht.

7. Vorrichtung (1) gemäß Anspruch 6, wobei besagtes Multiplikatorsystem weiter ein Anschlagelement (16) umfasst, das fest mit besagter Hebestange (10) verbunden ist und and geeignet ist, um besagten Rücklaufhebel (13) so zu drehen, das besagtes Zahnsystem (15) freigegeben wird und folglich die Drehung des besagten Freilaufs (14) mit Bezug auf besagtes Zahnrad (12) im Uhrzeigersinn erlaubt wird, um das vollständige Absenken des Palettenstapels (2) zu erlauben.

8. Vorrichtung (1) gemäß einem der vorstehenden Ansprüche 4-7, wobei besagte Hebestange (10) in Bezug auf die Auflagefläche der Vorrichtung (1) auf einer Höhe platziert ist, die größer als die Höhe der Referenzpalette (2) ist.

## Revendications

1. Dispositif (1) pour déplacer des palettes (2) comprenant un corps central constitué d'un premier élément latéral (21) et d'un second élément latéral (22), parallèles l'un à l'autre, et d'un élément postérieur (23) pour relier les éléments latéraux (21, 22) l'un à l'autre de manière à délimiter entre eux une zone vide (24) conçue pour contenir une pluralité de palettes (2) empilées les unes sur les autres, dans lequel ledit corps central est également pourvu d'une ouverture (25) entre lesdits éléments latéraux (21, 22) sur le côté opposé dudit élément postérieur (23) de manière à prendre sensiblement la forme d'un U, dans lequel ladite ouverture (25) est apte à permettre le passage d'au moins une palette (2) pour son insertion/retrait dans/hors de ladite zone vide (24),
dans lequel ledit dispositif (1) est également pourvu :
- d'au moins un premier arbre (3a) disposé le long dudit premier élément latéral (21) et d'au moins un second arbre (3b) disposé le long dudit second élément latéral (22), lesdits arbres (3a, 3b) étant tous deux disposés vers l'extérieur du dispositif (1) par rapport à ladite zone vide (24) ;
- d'au moins une première roue à rochet (5a) capable de tourner intégralement avec ledit premier arbre (3a) et d'une seconde roue à rochet (5b) capable de tourner intégralement avec ledit second arbre (3b), dans lequel chacune desdites roues à rochet (5a, 5b) est conçue pour s'enclencher/se désenclencher avec une dent d'arrêt correspondante (6) pour soutenir ladite pile de palettes (2) ou la libérer (2) pour lui permettre de descendre,
dans lequel chacune desdites roues à rochet (5a, 5b) est capable de tourner intégralement avec une première roue à lamelles (4a) et une seconde roue à lamelles (4b) correspondantes, chacune étant pourvue d'éléments lamellaires d'engagement (26) et dans lequel le pas entre deux lamelles successives (26) est tel qu'une lamelle (26) à la fois peut être insérée dans une cavité formée latéralement dans une palette de référence (2),
**caractérisé en ce que**
ledit dispositif (1) comprend également au moins une barre de levage (10) disposée de manière sensiblement horizontale, transversale auxdits premier (21) et second éléments latéraux (22) au niveau de ladite ouverture (25), et pouvant être contrainte avec ledit premier arbre (3a) au niveau d'une de ses premières extrémités, et avec ledit au moins un second arbre (3b) au niveau d'une seconde extrémité de celui-ci, opposée à ladite première extrémité, dans lequel ladite barre de levage (10) peut être déplacée verticalement vers le bas ou vers le haut de manière à provoquer la rotation conséquente de chacun desdits premier (3a) et second arbres (3b) et de la roue à rochet correspondante (5a, 5b) qui lui est solidaire, de sorte que le déplacement consécutif desdits éléments d'engagement (26) desdites première (4a) et seconde roues à lamelles (4b) permette, respectivement, le levage ou l'abaissement mécanique de ladite palette de référence (2)

2. Dispositif (1) selon la revendication 1, dans lequel lesdits premier (3a) et second (3b) arbres sont reliés l'un à l'autre par un dispositif de fixation (29) au niveau de l'élément postérieur (23), de sorte que le premier arbre (3a) tourne dans la direction opposée au second arbre (3b).

3. Dispositif (1) selon l'une quelconque des revendications précédentes, comprenant également un levier (7) pour chacune desdites dents d'arrêt (6), s'engageant avec celle-ci (6) pour permettre la rotation desdites roues à rochet (5a, 5b).

4. Dispositif (1) selon la revendication 3, comprenant également une goupille (8) actionnable par ledit levier (7) et disposée le long d'un chemin de came (9).

5. Dispositif (1) selon l'une quelconque des revendications précédentes, comprenant également, pour chacun desdits premier (3a) et second (3b) arbres, un système multiplicateur associé à celui-ci, capable de faire tourner lesdites roues à lamelles (4a, 4b) en fonction dudit déplacement de ladite barre de levage (10), dans lequel ledit système multiplicateur est constitué d'au moins une crémaillère (11), une roue dentée (12) et une roue libre (14) pourvue d'un système de dents (15), dans lequel ladite roue libre (14) est reliée à l'arbre correspondant (3a, 3b) auquel ledit système multiplicateur est associé.

6. Dispositif (1) selon la revendication 5, dans lequel ladite roue dentée (12) est pourvue d'un levier anti-retour (13) capable de faire tourner ladite roue dentée (12) dans le sens des aiguilles d'une montre par rapport à ladite roue libre (14), ou de le faire glisser en saisissant ledit système de dents (15) s'il tourne dans le sens opposé.

7. Dispositif (1) selon la revendication 6, dans lequel ledit système multiplicateur comprend également un élément de butée (16) intégré à ladite barre de levage (10) et conçu pour faire tourner ledit levier anti-retour (13) de manière à libérer ledit système de dents (15) et, par conséquent, à permettre la rotation dans le sens horaire de ladite roue libre (14) par rapport à ladite roue dentée (12) pour que la pile de palettes (2) puisse descendre complètement.

8. Dispositif (1) selon l'une quelconque des revendications 4 à 7 précédentes, dans lequel ladite barre de levage (10) est placée à une hauteur par rapport à la surface de support du dispositif (1) qui est supérieure à la hauteur de la palette de référence (2).
